Europäisches Patentamt

European Patent Office

Office européen des brevets

(11) Numéro de publication : **0 287 413 B1**

(12) FASCICULE DE BREVET EUROPEEN

(45) Date de publication du fascicule du brevet :
03.06.92 Bulletin 92/23

(51) Int. Cl.⁵ : **B29C 59/10**

(21) Numéro de dépôt : **88400691.7**

(22) Date de dépôt : **22.03.88**

(54) Procédé de traitement de matériaux polymères par décharge couronne.

(30) Priorité : 26.03.87 FR 8704240

(43) Date de publication de la demande :
19.10.88 Bulletin 88/42

(45) Mention de la délivrance du brevet :
03.06.92 Bulletin 92/23

(84) Etats contractants désignés :
BE DE ES GB IT

(56) Documents cités :
EP-A- 0 010 632
EP-A- 0 127 149
GB-A- 1 326 197
US-A- 3 309 221
US-A- 3 687 832
US-A- 4 140 607
US-A- 4 511 419
INDUSTRIAL & PRODUCTION ENGINEERING,
vol. 11, no. 3, Octobre 1987, pages 147-149,
Industrial & ProductionEngineering, Munich,
DE; G. LIEBEL et al.: "Pretreatment of plastics
surfaces in the low-pressure plasma"

(73) Titulaire : **ELECTRICITE DE FRANCE Service
National**
**2, rue Louis Murat**
**F-75008 Paris (FR)**
Titulaire : **REGIE NATIONALE DES USINES
RENAULT**
**Boîte postale 103 8-10 avenue Emile Zola**
**F-92109 Boulogne-Billancourt (FR)**
Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Amouroux, Jacques**
**13 boulevard de Villeziers**
**F-91440 Bures sur Yvette (FR)**
Inventeur : **Goldman, Max**
**5 Chemin des Buttes**
**F-91190 Gif sur Yvette (FR)**
Inventeur : **Spartacus, Pierre**
**3 place Edouard Renard**
**F-75012 Paris (FR)**

(74) Mandataire : **Le Guen, Gérard et al**
**CABINET LAVOIX 2, place d'Estienne d'Orves**
**F-75441 Paris Cédex 09 (FR)**

## Description

La présente invention concerne un procédé de traitement de surface d'un article en un matériau polymère par décharge de type couronne dans le but notamment d'augmenter l'adhérence sur cet article d'un revêtement ultérieur, tel qu'un revêtement de peinture, de vernis ou d'un adhésif en vue de réaliser un assemblage de ce matériau avec un matériau de nature différente.

On connaît déjà l'influence favorable d'un traitement superficiel par décharge couronne à la pression atmosphérique, sur la mouillabilité et l'adhésivité d'articles en matériaux polymères. Les actions mécaniques, thermiques et chimiques, responsables de l'efficacité du traitement, sont étroitement liées aux paramètres électriques de la décharge (potentiel appliqué, distances et configuration des électrodes), ainsi qu'à la nature chimique du gaz plasmagène utilisé (facilité d'obtention d'espèces chargées ou neutres, activées se succédant les unes aux autres dans l'espace interélectrode), et à son mode d'introduction (par exemple électrode creuse).

L'adaptation de ce type de traitement aux pièces pleines a conduit à la réalisation de têtes d'électrodes de traitement de type multi-traces, ayant la forme conjuguée de la pièce à traiter.

Dans la demande de brevet français 86 13 919 on a en outre proposé de réaliser la décharge de façon diffuse à l'aide d'électrodes comprenant un grand nombre de pointes présentant un renflement terminal.

Ces électrodes permettent d'homogénéiser le flux de l'énergie arrivant sur la surface de l'article à traiter. Elles limitent très sensiblement les risques de passage à un régime d'arcs, toujours destructeurs aux points d'impact sur l'article à traiter, et autorisent l'application d'un plus grand potentiel entre les électrodes.

Grâce à cette technique l'adhérence des revêtements sur des articles en matériaux polymères a été améliorée. C'est ainsi par exemple qu'on a obtenu une amélioration de l'adhérence d'une peinture de type polyuréthanne sur des plaques de plusieurs millimètres d'épaisseur en polypropylène ou ses alliages chargés ou non. Ces traitements permettent plusieurs mois de stockage, en atmosphère normale, propre, avant la mise en peinture.

Toutefois, lors du traitement par décharge couronne, à la pression atmosphérique, de pièces très tourmentées et évidées, certaines difficultés sont apparues, à savoir un mauvais écoulement des charges superficielles, et un passage à un régime d'arcs lors du passage de zones évidées où les électrodes sont en vis-à-vis direct, dès lors que la différence de potentiel appliquée le permet.

La présente invention vise à remédier à cet inconvénient.

Par ailleurs, EP-A-0010 632 a décrit un procédé de traitement de matières plastiques par décharge couronne pour améliorer leur adhérence et qui consiste à utiliser comme atmosphère un mélange de $N_2/CO_2$ de 95,5/0,5 à 50/50 et contenant au plus 0,1 % en volume de $O_2$. Le document fait référence à des pressions de 100 torrs à 3 atmosphères qui sont en fait considérées comme équivalentes.

La présente invention a pour objet un procédé pour augmenter l'adhérence d'un revêtement sur un article en matériau polymère, par traitement superficiel par décharges diffuses de type couronne dudit article dans une enceinte étanche contenant un gaz, caractérisé en ce que l'on effectue les décharges diffuses de type couronne à une pression de $1.10^3$ Pa à $5.10^4$ Pa.

La pression utilisée est avantageusement de $5.10^3$ Pa à $4.10^4$ Pa.

Le fait d'opérer à de telles pressions permet d'éviter le passage à un régime d'arcs. On a en outre constaté que l'on améliore le traitement en opérant avec un gaz enrichi en oxygène (qui peut être notamment de l'air contenant en plus 1% d'oxygène) ou même de l'oxygène pur.

Ce gaz est avantageusement amené en continu au niveau des électrodes pendant le traitement.

L'invention est exposée ci-après plus en détail en se référant aux dessins annexés sur lesquels

– la figure 1 est une vue d'ensemble d'une installation de traitement utilisée pour la mise en oeuvre du procédé selon l'invention

– les figures 2a et 2b sont des vues de détail respectivement en perspective et en coupe d'une électrode utilisée dans l'installation de la figure 1

– la figure 3, est un graphique donnant les valeurs des tensions et des intensités à différentes pressions.

– la figure 4 est une vue d'ensemble d'une autre installation de traitement qui peut être utilisée pour la mise en oeuvre du procédé selon l'invention.

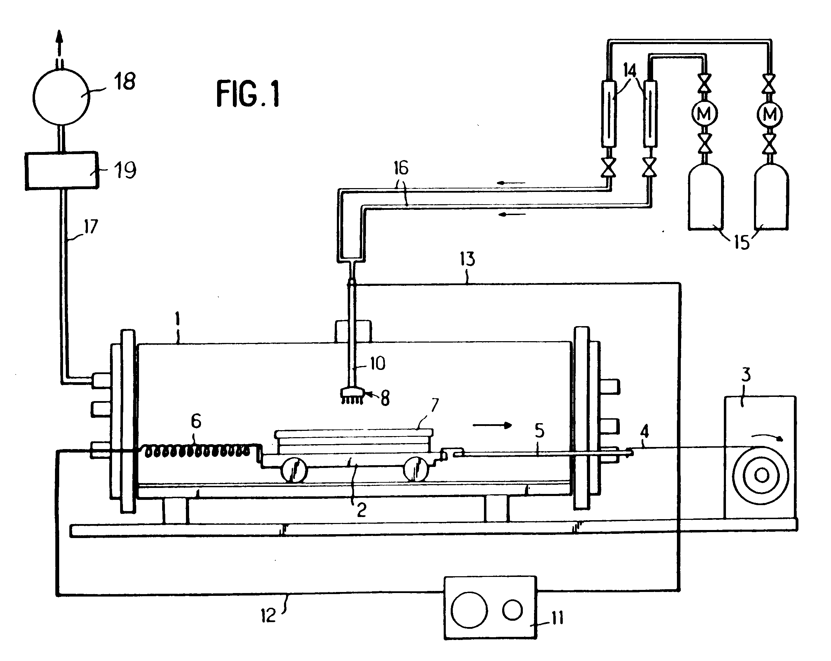

L'installation représentée sur la figure 1 est constituée par une enceinte étanche 1 dans laquelle peut se mouvoir un support 2 soumis à l'action d'un moteur électrique 3 par l'intermédiaire d'un câble 4 et d'une tige de traction 5 traversant l'enceinte de façon étanche connue en soi et reliée au support 2, lui-même soumis à l'action d'un ressort de rappel 6.

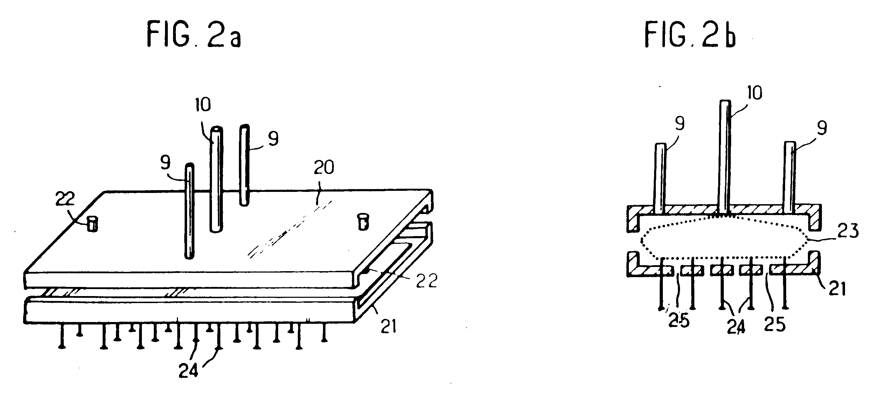

L'article 7 à traiter en matériau polymère repose sur le support 2, pouvant ainsi se déplacer par rapport à l'électrode multipointes qui est elle-même mobile en hauteur grâce à des tiges de guidage 9 représentées sur les figures 2a et 2b. Ces tiges 9 peuvent être des vérins hydrauliques télécommandés fixés à la partie supérieure de l'enceinte 1.

L'électrode 8 comporte une tige creuse 10 qui sert à la fois à amener le courant haute tension et le gaz de traitement. Cette tige traverse l'enceinte 1 de façon étanche et aboutit aux moyens appropriés connus en soi situés à l'extérieur de l'installation; ceux-ci peuvent être figurés par un générateur haute tension 11 et les conducteurs 12, 13 respectivement reliés au support 2 et à la partie extérieure de la tige creuse 10 : l'atmosphère gazeuse de l'enceinte 1 est controlée par des débimètres 14 et des réservoirs 15, via des canalisations 16 : l'évacuation des gaz et l'abaissement de la pression interne de l'enceinte 1 sont assurés à travers une canalisation 17 par une pompe 18. La pression de l'enceinte 1 est mesurée par un manomètre 19.

L'électrode multipointes 8 est représentée de façon détaillée aux figures 2a et 2b. Elle est composée de deux plaques isolantes respectivement supérieure 20 et inférieure 21, séparées par des entretoises 22, et comportent des rebords périphériques constituant ainsi un boîtier incluant une grille de cuivre 23 correspondant au volume interne du boîtier, reliée par sa face supérieure à l'arrivée du courant haute tension 10 et par sa face inférieure à des pointes métalliques 24 formant électrode; ces dernières traversent la plaque inférieure 21 qui est également pourvue d'orifices 25 pour le passage des gaz de traitement en provenance des canalisations 16 et du conduit 10.

Chaque pointe 24, fixée dans la plaque isolante 21, est constituée d'une tige dont l'extrémité supérieure effilée est réunie à la grille conductrice 23 sous haute tension. Sa partie inférieure forme un renflement d'extrémité sensiblement circulaire.

Avec cette installation on a effectué des essais de décharge de type couronne en utilisant un article constitué par une plaque de polypropylène et en opérant avec un gaz constitué par de l'air enrichi en oxygène (contenant 22 % d'oxygène).

On a constaté que la décharge couronne à la pression atmosphérique, en régime de dards (streamers), devient une décharge diffuse lorsque la pression décroit à $5.10^4$ Pa. Pour des pressions plus faibles ($<10^3$ Pa), le régime observé a l'aspect d'une décharge luminescente classique à basse pression, ou "glow discharge".

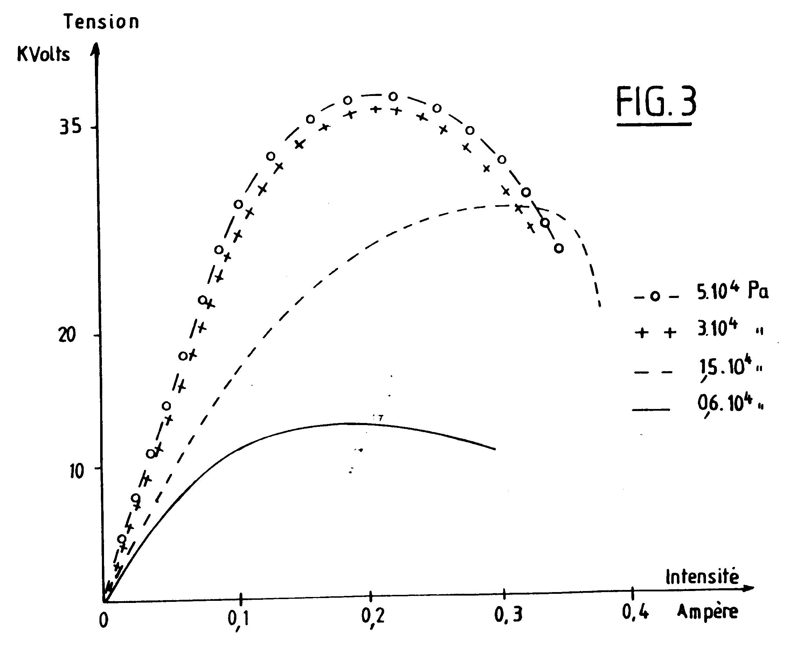

Ces changements d'aspect sont confirmés par les mesures (crêtes-crêtes) des tensions et des courants aux bornes des électrodes; on a reporté sur la figure 3 les résultats obtenus avec une plaque de polypropylène et une distance de traitement de 1 cm.

Ces courbes montrent que l'impédance du circuit équivalent diminue lorsque la pression diminue. Ainsi, pour une intensité donnée, les tensions diminuent lorsque la pression baisse ; les mécanismes ioniques ou électroniques sont alors favorisés le long de l'axe inter électrodes. Les premières couches de la surface traitée subissent une élévation de température importante; d'où compte tenu de la baisse de pression, la désorption de molécules gazeuses mais aussi le dégazage de la surface du matériau sont favorisés, tout comme l'évaporation de l'eau, adsorbée ou liée.

L'efficacité des traitements par décharges diffuses, que l'on assimile à une décharge abnormale, lorsque l'on opère à des pressions comprises entre $5.10^4$ Pa et $10^3$ Pa, peut s'exprimer selon trois résultats expérimentaux importants.

1) L'étalement du plasma sur la surface à traiter.

On a reporté dans le tableau suivant les résultats obtenus sur une plaque de polypropylène avec une distance de traitement de 1 cm et un traitement statique pendant 3 secondes.

## Tableau I

| Pression<br>K Pa | Largeur de surface plane traitée*<br>en $10^{-2}$ m |
|:---:|:---:|
| 7 | 10 |
| 25 | 7 |
| 50 | 5 |
| 102 | 3 |

* O% d'arrachement ("scratch-test").

Cette légère diffusion du plasma sur la surface à traiter peut permettre une diminution très sensible du temps de traitement global d'une pièce.

2) L'adhérence d'un revêtement à la surface de l'article augmente de façon importante.

On a reporté dans le tableau suivant les résultats obtenus par application d'une peinture à base de polyuréthanne (avec une épaisseur de 30 à 40 micromètres).

## Tableau II

| Distance de traitement | Pression K Pa | Charge maximale à la rupture en traction en MPa |
|---|---|---|
| 1 cm | 7 | 8 à 8,5 |
| | 25 | 7,5 |
| Vitesse de traitement | 50 | 6 |
| 10 m/h | 102 | 4 à 5 |

Cette importante augmentation quantitative de l'adhérence est corroborée par l'observation :
– du faciés d'arrachement, qui indique que la rupture, dans ce cas, se produit dans le matériau traité; rupture cohésive et non plus adhésive.
– de l'enregistrement de la force de traction en fonction du temps, qui montre que le matériau se déforme dans le domaine plastique, lorsque la charge à la rupture excède 7 MPa.

Les analyses E.S.C.A. effectuées sur le faciés d'arrachement obtenu pour des contraintes à la rupture supérieures à 7 MPa montrent que le revêtement peinture a diffusé sur une profondeur de l'ordre du micromètre, dans le matériau.

Le traitement a donc permis la formation d'une zone de diffusion assurant ainsi l'établissement d'une "interphase" revêtement-support.

Les valeurs maximales de charges à la rupture enregistrées, ne sont jamais supérieures à 10 MPa. Ceci suggère que cette mesure est limitée par la cohésion de l'interphase créée lors de l'enduction.

3) L'homogénéité de la décharge et du plasma pour la gamme de tensions utilisées.

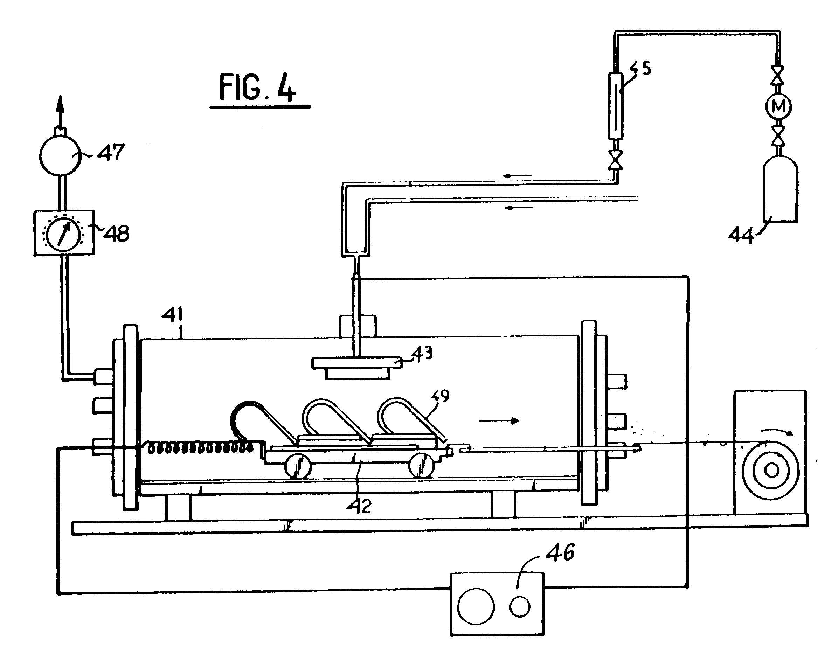

Dès que la pression du traitement devient inférieure à $4.10^4$ Pa le risque de passage à l'arc est très faible.
On a représenté sur la Fig. 4 un autre type d'installation qui convient pour la mise en oeuvre du procédé selon l'invention.
Cette installation comprend comme l'installation représenté sur la Fig. 1 une enceinte 41 comprenant un support mobile 42 constituant l'une des électrodes ainsi qu'une électrode de type couteau creux 43 disposée au-dessus du support 42. Des électrodes de ce type sont décrites dans FR-A-2 578 176. L'électrode 43 comporte une arrivée centrale de gaz alimentée d'une part par de l'air et d'autre part par un réservoir de gaz 44 via un débitmètre 45. Comme pour l'installation de la Fig. 1 un générateur HT 46 maintient la tension nécessaire entre les électrodes.
Le mélange gazeux est évacué par une pompe 47 et la pression est contrôlée par un manomètre 48.
On a représenté sur la Fig. 4 le traitement d'un élément formant grille 49.
Le procédé selon l'invention se distingue du procédé classique par décharge couronne à la pression atmosphérique par des adhérences bien supérieures de revêtement de peinture sur le substrat polymère, cette adhérence s'expliquant par la nature de la liaison du revêtement de peinture au substrat.
Le procédé selon l'invention se distingue de même des procédés utilisant de très faibles pressions, dits à plasma froid, qu'il soient en régime de radio-fréquences ou de microondes, par une adhérence bien supérieure des revêtements de peinture sur des substrats polymères. Par rapport à la technique des plasmas froids il pré-

4

sente en outre l'avantage d'utiliser des pressions moins faibles et donc plus aisément utilisables industriellement et de fournir des traitements nettement plus durables et permettant de n'effectuer le revêtement de peinture que plusieurs semaines après.

Compte tenu de la profondeur de diffusion, le procédé selon l'invention est particulièrement adapté aux matériaux polyméres, mis en forme rigide et n'ayant ni une grande pureté chimique, ni une grande propreté en surface.

Les pièces traitées doivent avoir une épaisseur supérieure au millimètre, afin que le traitement n'altère pas en volume les propriétés de la pièce telles que : résistance mécanique, tenu aux chocs, déformations élastiques, etc...

Compte tenu des améliorations tant du point de vue du procédé que des propriétés de surface apportées par la baisse de la pression, on peut faire, à titre d'exemple, des traitements en continu, à l'aide d'un sas, en utilisant la baisse de pression selon le type de relief de la surface à traiter, par exemple grille, et rétablir la pression atmosphérique quand la diminution de pression n'est pas absolument nécessaire.

On peut tout aussi bien prévoir sur une même ligne de traitement, un passage à la pression atmosphérique, puis un passage à pression réduite; le traitement étant alors "centré" sur une partie de la pièce.

En pratique, on peut opérer avec des distances entre l'électrode active et l'article à traiter de 1 à 6 cm.

Le procédé selon l'invention peut être appliqué à des articles en divers matériaux polymères. Comme exemple de matériaux polymères on peut citer le polypropylène, les copolymères de propylène et d'éthylène, leurs alliages et des matériaux composites les contenant.

Le procédé selon l'invention trouve une application notamment dans l'industrie automobile pour favoriser l'adhérence des revêtements de peinture ou d'adhésifs permettant l'assemblage de pièces en matériaux cités plus haut, entre elles ou en un de ces matériaux au reste de la structure.

## Revendications

1. Procédé pour augmenter l'adhérence d'un revêtement sur un article en matériau polymère, par traitement superficiel par décharges diffuses de type couronne dudit article dans une enceinte étanche contenant un gaz, caractérisé en ce que l'on effectue les décharges diffuses de type couronne à une pression de $1.10^3$ Pa à $5.10^4$ Pa.

2. Procédé selon la revendication 1, caractérisé en ce que l'on effectue les décharges diffuses de type couronne à une pression de $5.10^3$ Pa à $4.10^4$ Pa.

3. Procédé selon la revendication 1 ou la revendication 2, caractérisé en ce qu'on opère avec une distance entre l'électrode active et l'article à traiter de 1 à 6 cm.

4. Procédé selon l'une quelconque des revendications 1 à 3, caractérisé en ce que l'on opère avec un gaz enrichi en oxygène.

5. Procédé selon l'une quelconque des revendications 1 à 4, caractérisé en ce que l'on amène le gaz en continu au niveau des électrodes.

6. Procédé selon l'une quelconque des revendications 1 à 5, caractérisé en ce que l'on effectue un traitement en continu en réglant la pression en fonction du type de relief de la surface à traiter.

7. Procédé selon l'une quelconque des revendications 1 à 6, caractérisé en ce que le matériau polymère est choisi parmi le polypropylène, les copolymères de propylène et d'éthylène, leurs alliages et les matériaux composites les contenant.

## Patentansprüche

1. Verfahren zum Erhöhen des Haftvermögens eines Überzuges auf einem Gegenstand aus Polymermaterial durch Oberflächenbehandlung des Gegenstandes mittels diffuser Entladungen vom Corona-Typ in einer abgesperrten, ein Gas enthaltenden Umgebung, dadurch gekennzeichnet, daß man die diffusen Entladungen vom Corona-Typ bei einem Druck von $1.10^3$ Pa bis $5.10^4$ Pa bewirkt.

2. Verfahren nach Anspruch 1, dadurch gekennzeichnet, daß man die diffusen Entladungen vom Corona-Typ bei einem Druck von $5.10^3$ Pa bis $4.10^4$ Pa bewirkt.

3. Verfahren nach Anspruch 1 oder 2, dadurch gekennzeichnet, daß man mit einem Abstand von 1 bis 6 cm swischen der aktiven Elektrode und dem zu behandelnden Gegenstand arbeitet.

4. Verfahren nach einem der Ansprüche 1 bis 3, dadurch gekennzeichnet, daß man mit einem sauerstoffangereicherten Gas arbeitet.

5. Verfahren nach einem der Ansprüche 1 bis 4, dadurch gekennzeichnet, daß man das Gas kontinuierlich in Höhe der Elektroden zuleitet.

6. Verfahren nach einem der Ansprüche 1 bis 5, daß man eine kontinuierliche Behandlung bei Regelung des Druckes als Funktion des Relieftyps der zu behandelnden Fläche durchführt.

7. Verfahren nach einem der Ansprüche 1 bis 6, dadurch gekennzeichnet, daß das Polymermaterial aus Polypropylen, den Copolymeren von Propylen und Äthylen, ihren Mischungen und Verbundmaterialien, die diese enthalten, ausgewählt wird.

**Claims**

1. Method of increasing the adhesion of a coating on an article of polymer material, by a surface treatment, by way of corona-type diffuse discharges, of the said article in a sealed container containing a gas, characterized in that the corona-type diffuse discharges are effected at a pressure of $1 \times 10^3$ Pa to $5 \times 10^4$ Pa.

2. Method according to Claim 1, characterized in that the corona-type diffuse discharges are effected at a pressure of $5 \times 10^3$ Pa to $4 \times 10^4$ Pa.

3. Method according to Claim 1 or Claim 2, characterized in that said method operates with a distance of 1 to 6 cm between the active electrode and the article to be treated.

4. Method according to any one of Claims 1 to 3, characterized in that said method operates with a gas enriched with oxygen.

5. Method according to any one of Claims 1 to 4, characterized in that the gas is brought continuously to the location of the electrodes.

6. Method according to any one of Claims 1 to 5, characterized in that a continuous treatment is effected by regulating the pressure as a function of the type of relief on the surface to be treated.

7. Method according to any one of Claims 1 to 6, characterized in that the polymer material is selected from polypropylene, the copolymers of propylene and of ethylene, their alloys and the composite materials containing them.

FIG.1

# FIG. 2a

# FIG. 2b

EP 0 287 413 B1

FIG.3

Tension
KVolts

35

20

10

$-o-$   5.10$^4$ Pa

$+ +$   3.10$^4$ "

$- -$   15.10$^4$ "

_____   06.10$^4$ "

Intensité

0   0,1   0,2   0,3   0,4   Ampère

EP 0 287 413 B1

9

FIG. 4